# EUROPEAN PATENT APPLICATION

(11) **EP 2 695 908 A2**
(43) Date of publication of application: **12.02.2014**
(21) Application number: 12767411.7
(22) Date of filing: 30.03.2012
(51) Int. Cl.: C08J 9/04, C08L 25/06, C09D 175/04, B60V 1/00, B60F 3/00

(54) **MOLDED FOAM PRODUCT, AND BUOYANT MATERIAL AND CONSTRUCTION MATERIAL INCLUDING SAME**

(30) Priority: 04.04.2011 KR 20110030506; 30.03.2012 KR 20120032876
(71) Applicant: Yetoo Co., Ltd., Chungcheongbuk-do 365-860 (KR); Clife Co., Ltd., Busan 618-270 (KR)
(72) Inventor: KIM, Yong Guen, Seoul 153-030 (KR)
(74) Representative: Groth & Co. KB
(86) International application number: PCT/KR2012/002393
(87) International publication number: WO 2012/138081

(57) **Abstract**

The present invention relates to a molded foam product, and to a buoyant material and a construction material including same, and particularly, to a molded foam product characterized by including a foam product filled in a frame and having a coating layer formed on the surface of the foam product, wherein films of paint having good physical properties and durability can be formed, and accordingly, a buoyant material and a construction material can be provided which are a little safer and are resistant to impacts.

## Description

### [Technical Field]

The teachings in accordance with exemplary embodiments of this invention relate generally to foam products including frames and foam bodies, and more particularly to form products having excellent properties and durability, through which buoyant structure and construction materials that are lighter, safer and more robust to shock can be provided.

### [Background Art]

The conventional ships and leisure boats are made of buoyant structure such as metals, FRPs (Fiber-Reinforced Plastics), woods, and air tubes. Although these buoyant structure are materials that have been universally utilized for a long time, an entire area of the ships or boats are mostly made of materials of same specific gravity to disable improvement of restoring force by the buoyant structure per se, or adjustment of self weight for each position. Furthermore, it is difficult to mass- produce the buoyant structure, and the buoyant structure are susceptible or weak to outside shocks due to being basically used for water-related activities.

Concomitant with expanding leisure-related activities, leisure equipment simultaneously operable on land and in water comes to have limelight. However, most of the leisure equipment suffers from disadvantages in that it uses the conventional buoyant structure, and it is susceptible to water-tightness damage, water-logging and rollover when colliding with submersible rocks and land-based rocks, because access to and from water and land is frequent to result in instability during movement in water or on land.

Furthermore, the conventional military amphibious moving objects are strongly and heavily manufactured with a buoyant material such as steel in order to withstand external shocks such as bullets. As a result, size of the equipment has inevitably increased to cope with weight by generating buoyancy. Furthermore, in manufacturing military boats, they require use of light, bullet-proof and elastic materials instead of conventional rubber or air-contained materials.

Buoyant structure of a life boat furnished on a ship was relatively heavy, and it was also difficult to manufacture the life boat. The life boat always carried along with a ship for emergency must be light for easy use and energy saving. Furthermore, the life boat requires buoyant structure of low specific gravity that is unsinkable if even rolled over. Hence, manufacturing of a life boat capable of withstanding sunlight and cold with buoyant structure itself is required.

Meantime, construction of retaining wall, backfilling for stone structure and stone-filled drain was conventionally performed using natural aggregates and crushed stones. However, the natural aggregate materials are difficult to acquire these days, and expensive as well. Other disadvantages are that the natural aggregate materials are difficult in adjustment of grain refining for filter relative to soil character at various sites, and collapse accidents of retaining wall and stone structure frequently occur due to increased earth pressure and hydraulic pressure during heavy rains caused by bad drainage from shoddy and fault construction in backfilling.

In addition, even conventional prefabricated buildings have required much cost and time because construction was performed by splicing of each piece of materials. Particularly, houses provided on seawater have faced much difficulty and inconvenience in construction when used with conventional techniques and construction materials, and there has been a limit in selection of construction materials capable of securing stability on water.

### [Disclosure]

### [Technical problem]

Accordingly, the present invention is provided to solve the aforementioned disadvantages, and it is an object of the present invention to provide foam products including frames and foam bodies having excellent properties and durability, through which buoyant structure and construction materials that are lighter, safer and resistant to shock can be provided.

That is, the present invention, as a measure to solve the conventional problems, provides a new self weight-adjustable buoyant structure that is constructed through foaming, manufactured in a laminated structure, light in weight by being equipped with overlapped frames, resistant to external shocks, mass-manufacturable, and capable of improving restoring force by characteristic of material itself.

Furthermore, the present invention is provided in consideration of the aforementioned requirements, and provides a buoyant structure for amphibious moving objects that is light in weight, excellent in buoyancy, and obtainable of mechanical strength and mass-manufacturability.

In addition, the present invention is to provide a buoyant structure for manufacturing military boats equipped with bullet-proof and explosive-proof capability, and a buoyant structure for manufacturing life boats that are useable by being thrown to seas during emergency in ships including distress.

Furthermore, the present invention is to provide construction materials configured to prevent collapse accidents of civil engineering structures through reduced osmosis and smooth drainage, and to improve constructability, economic efficiency and safety, by using the abovementioned foam products as backfilling materials for retaining walls and stone structures, and to provide construction materials that are light in weight and easy in installation of prefabricated buildings and houses on seas, self-weight adjustable and very efficiently useable.

### [Technical Solution]

In order to accomplish the above objects, in one general aspect of the present disclosure, there are provided foam products including a foam body overlapped with a frame, wherein the foam body includes PS (Polystyrene) or polyurethane, and a surface and/or an interior of the foam body is formed with a coated layer of polyurea including isocyanate.

Preferably, but not necessarily, the PS may include styrene, wherein the PS may be one or more selected from a group consisting of GPPS (General Purpose Polystyrene) which is a homopolymer of styrene, HIPS (High Impact Polystyrene) and EPS (Expandable Polystyrene) mixed with foaming agents.

Preferably, but not necessarily, the foam body may include polyurethane, wherein the polyurethane may include polyisocyanate, and is one or more selected from a group consisting of polyether polyurethane including polyol, and polyester polyurethane including diol or triol.

Preferably, but not necessarily, the foam body may include polyurethane, wherein the polyurethane may include a laminated configuration, in which polyester polyurethane and polyether polyurethane of mutually different specific gravity, polyester polyurethane and polyester polyurethane of different specific gravity, or polyether polyurethane and polyether polyurethane of different specific gravity are laminated.

Preferably, but not necessarily, the foam body may include polyurethane, wherein the polyurethane may include a configuration laminated with polystyrene.

Preferably, but not necessarily, the polystyrene or the polyurethane may increase in surface strength and/or inner strength through adhesive strength with polyurea forming a coated layer.

Preferably, but not necessarily, the polyurea may include amine, or amine and polyol.

Preferably, but not necessarily, the polyurea-coated layer may be configured to bond a part of or all of the frames.

Preferably, but not necessarily, the frame may be overlapped with a part of surface of the foam body to bond the coated layer, and a part or all the frame may be configured to pass through the foam body to bond the other surface of the coated layer.

Preferably, but not necessarily, the frame may be mounted with a device capable of being connected to or coupling other foam bodies, other mechanisms or other equipment.

Preferably, but not necessarily, the frame may include one or more of a first member having a mesh structure, a honeycomb structure or a sponge structure, and a second member having a single structure, which is to reinforce strength of the foam body.

Preferably, but not necessarily, the frame may include the first member and the second member, wherein at least a part of the first member and the second member may face each other.

Preferably, but not necessarily, one or more of the first member and the second member is coated with polyurea, or may include an inner coated layer coupled by polyurea, which is one of measures to increase buoyancy and elasticity of the foam product through water-proof and elasticity, which are characteristics of polyurea.

Preferably, but not necessarily, the frame may be configured such that a part of surface of foam body is overlapped with a separate frame, wherein a part or all of the separate frame may pierce the foam body to overlap the coated layer of the other surface, which is a measure of utilization in a case a coupled degree between the frame and the foam body is low, and which is used, in a case a frame-coupled degree is low such as polystyrene to reinforce tensile strength between the foam body and the coated layer.

Preferably, but not necessarily, the foam product may further comprise a foam body overlapped with the frame, and a support member piercing the inner coated layer formed at the foam body.

Preferably, but not necessarily, the support member may pierce the inner-coated layer to be coupled to the surface coated layer.

Preferably, but not necessarily, the frame may be overlapped with the foam body as a piercing type cylinder, the piercing type cylinder frame may be mounted with switches at front and rear sides to accommodate water or air, whereby self-weight and buoyancy of foam products can be adjusted by water and air.
For example, in a case the foam products are utilized as buoyant structure for use in ships and leisure boats, the ships or the leisure boats may be configured with a piercing type cylinder frame formed inside a buoyant body with a space for adjusting specific gravity. The space secured by the piercing type cylinder frame may be accommodated with water or air, and the air may be accommodated, in a case buoyancy is low, and the water may be accommodated, in a case stability is required for mooring.

Preferably, but not necessarily, the piercing type cylinder frame may be configured such that a front switch is attached to an upper end of the foam product to accommodate air, and a rear switch may be attached to a lower end of the foam product to accommodate water. For example, in a case front and rear switches are mounted, the front switch may be positioned outside of water, while the rear switch may be positioned inside the water to efficiently operate the ships or the leisure boats. Ships or leisure boats utilizing the foam products have very low specific gravity, such that a draft line may be relatively high, thereby causing instability to the ships or leisure boats. In order to overcome the disadvantage, and in view of the fact that ships or leisure boats are characteristically lifted up at bow during high speed operation, the piercing type cylinder frame capable of reducing weight during sailing is provided to automatically reduce weight by allowing air to be introduced through a front switch.

The piercing type cylinder frame may be configured such that water is automatically introduced through a rear switch when the operation is stopped to provide safety during mooring and slow speed, for example. The piercing type cylinder frame may allow air to be accommodated to increase an entire buoyancy of the foam product, in a case front and rear switches are all closed while air is accommodated, and conversely, in a case the piercing type cylinder frame is accommodated with water, the foam products can be stabilized.

### [Advantageous Effects]

The present invention includes a frame-overlapped foam body, and is characterized by foam products formed with a coated layer at a surface and/or at an interior of the foam body, and provides buoyant structure and construction materials that are lighter, safer and more robust to shock by forming paint films.

Furthermore, according to the present invention, buoyant structure and construction materials can be manufactured, wherein the buoyant structure and construction materials can be manufactured through foaming, and are formed with overlapped frame structure, light due to enablement of laminated (laminated, multi-layered) structure for adjustment of specific gravity, excellent in buoyancy, mass-produceable and even obtainable of mechanical strength, whereby buoyant structure can be advantageously provided that is innovatively improved over materials utilizing metals, FRPs and woods used on conventional ships and water leisure equipment, and self specific gravity adjustment in buoyant structure forming the conventional ships can be possible to improve buoyancy and restoring force from the materials or structure itself and self weight can be adjusted.

In a case the buoyant structure according to the present invention is utilized for amphibious moving objects frequently entering and/or existing water, danger of wrecking water-tightness during collision with hard objects such as submerged rocks and land rocks can be reduced, and the fear of overturn that may occur in a structure designed for land movement can be drastically reduced.

Meantime, in a case the buoyant structure according to the present invention is utilized for a buoyant structure for military equipment, and in a case a bullet-proof material is inserted as an additional overlapping frame, light and elasticity-strong military-use equipment can be manufactured that is capable of performing bullet-proof and explosion-proof functions.

The buoyant structure may be advantageously applicable to military rubber boats, where light, bullet-proof and elastic buoyant structure over rubber tube is provided to enable an effective military operation to be more safely conducted unlike the conventional rubber boats.

Furthermore, in a case the buoyant structure according to the present invention is utilized for medium-sized boats, leisure boats and foldable or assembleable boats, mass production is enabled, restoring force can be improved by characteristics of material and structure itself, and self weight control is enabled to allow manufacturing a much advanced ships and leisure boats for safer utilization.

The present invention may be very usefully utilized for manufacturing rescue boats, because the rescue boats can obtain lightness, strength and high buoyancy if used with the present invention. In case of rescue boats that must be always carried on a ship for emergency, the present invention may contribute to use convenience and energy saving as well because of light weight.

The foam products as in the present invention may be used as backfill materials for retaining walls and stone structures to prevent collapse accidents of civil engineering structures, and to promote constructability, economic efficiency and safety due to reduction in pressure and smooth drainage.

Furthermore, drainage method capable of preventing collapse accidents that occur due to bad drainage construction of civil engineering structure, by using lightness and water permeability, and particularly, if used for retaining walls, stone structures and foam resin drainage method for abutment backfill construction, earth pressure can be reduced, drainage can be smoothed, structure collapse accidents that may occur during increase in ground water level caused by rainfall and other reasons can be prevented in advance to increase safety, whereby economic drainage method for civil engineering construction capable of man-power construction can be allowed due to light weight of the foam products. In a case the present invention is used for the abovementioned purposes, it is preferable that a direct foaming method be used instead of manufacturing method that uses a mold.

The foam products according to the present invention may be utilized as building materials. Particularly, the foam products according to the present invention may be utilized for prefabricated buildings. Although construction was conventionally carried out where each of relatively heavy materials was joined, and coupled in piece-by-piece manner in order to maintain strength, a building can be constructed with a lighter stronger material by foaming a predetermined part or an entire area of a structure through which cost and time can be much saved. Particularly, the foam products may be more useful for maritime housings. That is, weight itself of construction materials very much inconvenient as conventional construction materials using conventional techniques can be adjusted, whereby mass production is enabled through foaming mold, and therefore, the foam products can used as construction materials and buoyant structure capable of obtaining a further stability on water.

### [Description of Drawings]

FIG. 1 is a cross-sectional view illustrating a structure of foam product according to an exemplary embodiment of the present invention.
FIG.2 is a cross-sectional view illustrating a forming method of overlapping a frame and a foaming body through a mold according to the present invention.
FIG.3 is a mimetic view illustrating a process of continuously forming a frame using a mold according to the present invention.
FIG.4 is a cross-sectional view illustrating a frame including a first member, a second member and a coated layer according to the present invention.
FIG.5 is a cross-sectional view illustrating a structure of a foam product including a support member according to the present invention.
FIG.6 is a cross-sectional view illustrating a structure of a foam product including a ring or a coupling device capable of coupling or connecting other foam products or equipment to a frame including a support member according to the present invention.
FIG. 7 is a cross-sectional view illustrating a structure of a foam product in which a frame including a support member pierces a foam body to be coupled to a coated layer according to the present invention.
FIG.8 is a cross-sectional view illustrating a structure of a foam product in which a part or an entire of a frame is coupled to a coated layer according to the present invention.
FIG.9 is a cross-sectional view illustrating a structure of a foam product in which a part of surface of foam body is overlapped with a frame to be coupled to a coated layer, and a part or an entire area of the frame pierces the foam body to be coupled to the other surface of the coated layer according to the present invention.
FIG. 10 is a cross-sectional view illustrating a structure of a foam product including a piercing type cylinder frame according to the present invention.
FIG.11 is a photograph illustrating a result of strength in an experiment of a coated layer-free polyurethane foam product as a comparative example according to an experimental example of the present invention.
FIG. 12 is a photograph illustrating a result of strength in an experiment of a coated layer-processed polyurethane foam product as an experimental example according to the present invention.
FIGS.13, 14 and 15 are photographs illustrating a result of experiment of a process in which foam bodies, each having a different specific gravity, are laminated as experimental examples according to the present invention.
FIGS. 16 and 17 are photographs illustrating a result of UV-resistance experiment of a coated layer-free polyurethane foam product as experimental examples according to the present invention.
FIGS. 18 and 19 are photographs illustrating laminated foam with polyurethane and polystyrene as experimental comparative examples according to the present invention.
FIGS. 20 and 21 are photographs illustrating a process of overlapping a frame to a foam body and a result of an experiment after foaming as experimental comparative examples according to the present invention.

### [Best Mode]

While the present disclosure is susceptible to various modifications and alternative forms, certain implementations are shown by way of example in the drawings and, these implementations will be described in detail herein. It will be understood, however, that this disclosed concept is not intended to limit the disclosure to the particular forms described, but to the contrary, the disclosure is intended to cover all modifications, alternatives, and equivalents falling within the spirit and scope of the concept defined by the appended claims.

In describing the present invention, detailed descriptions of constructions or processes known in the art may be omitted to avoid obscuring appreciation of the invention by a person of ordinary skill in the art with unnecessary detail regarding such known constructions and functions.

The terminology used herein is for the purpose of describing particular implementations only and is not intended to be limiting of the present disclosure.

As used herein, the terms "a" and "an" herein do not denote a limitation of quantity, but rather denote the presence of at least one of the referenced item. That is, as used herein, the singular forms "a", "an" and "the" are intended to include the plural forms as well, unless the context clearly indicates otherwise.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

The terms "first," "second," and the like, herein do not denote any order, quantity, or importance, but rather are used to distinguish one element from another. For example, a second constituent element may be denoted as a first constituent element without departing from the scope and spirit of the present disclosure, and similarly, a first constituent element may be denoted as a second constituent element. As used herein, curing and hardening may be interchangeably used, and stacking and laminating may be interchangeably used.

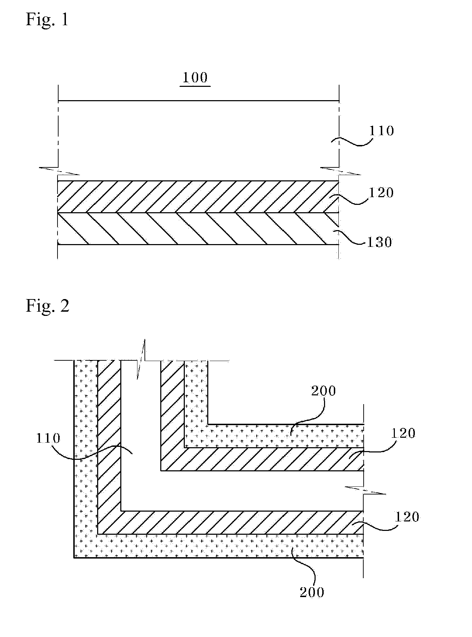

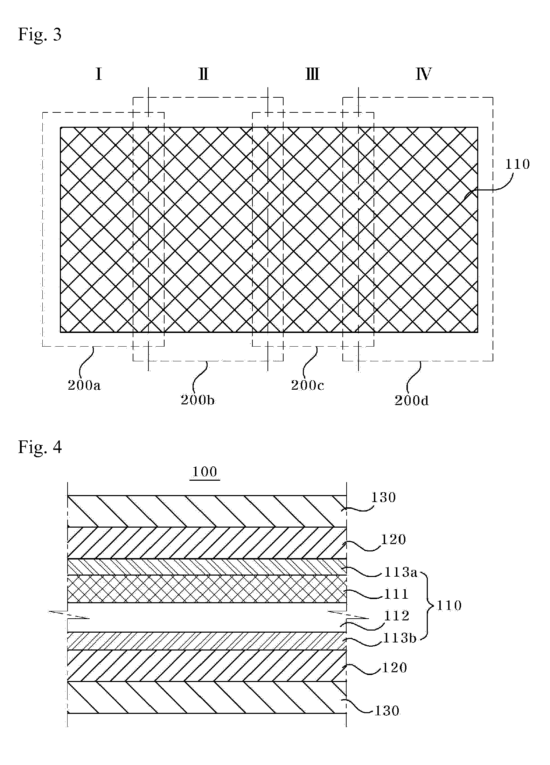

FIG. 1 is a cross-sectional view illustrating a structure of foam product according to an exemplary embodiment of the present invention, FIG.2 is a cross-sectional view illustrating a forming method of overlapping a frame and a foaming body through a mold according to the present invention, and FIG.3 is a mimetic view illustrating a process of continuously forming a frame using a mold according to the present invention.

The foam product (100) according to the present invention comprises a foam body (120) overlapped with a frame (110), wherein the foam body (120) includes PS (Polystyrene) or polyurethane, and wherein the PS may include styrene, and wherein the PS may be one or more selected from a group consisting of GPPS (General Purpose Polystyrene) which is a homopolymer of styrene, HIPS (High Impact Polystyrene) in which styrene is polymerized with rubber, and EPS (Expandable Polystyrene) mixed with foaming agents, and wherein the polyurethane includes polyisocyanate, and may be one or more selected from a group consisting of polyether polyurethane including polyol, and polyester polyurethane including diol, and wherein a surface and/or an interior of the foam body (120) may include isocyanate, and may be formed with polyurea-coated layers (130, 113a, 113b)including amine or amine and polyol.

First, the frame (110) is a basic structure of the foam product (100) accord to the present invention, and may be configured to increase strength of the foam product. The material or shape is not particularly limited and may include all that are known in the art. The foam product (100) is configured to overlap the frame (110) and the foam body (120), wherein the frame (110) may be formed with at least one material from a metal, a synthetic resin, a carbon, a wood, a fibroid material, a cement and stone structure, and may be formed in a single structure, a mesh structure, a honeycomb structure or a sponge structure, and the frame (110) is a portion configured to increase a mechanical strength of the foam product (100). The foam product (100) according to the present invention is configured with a structure where a frame including a foam body is overlapped, where the frame may include one or a plurality of members for reinforced strength. The detailed description of the frame (110) will be described in detail later.

However, it is difficult to provide buoyancy to the foam product (100) using the frame (110) alone. Thus, it is necessary to manufacture the foam product (100) by overlapping the frames (110) to the foam body (120) comprised of materials capable of securing very high positive buoyancy. The foam body (120) according to the present invention may include polystyrene or polyurethane and may be included and laminated (stacked) with polystyrene foam body in case of polyurethane foam body.

In one exemplary embodiment, polystyrene foaming or polyurethane foaming will be explained in the following.

Polystyrene or polyurethane is a foamable material, and may be categorized into a soft material, a semi-hard material and a hard material. In order to manufacture a predetermined shape, polystyrene or polyurethane is foamable to cater to a mold (200), and light and has a wider freedom in adjustment of hardness or strength. The polystyrene or polyurethane can be adjusted in such characteristics as elasticity, restoring force, heat-resistance, oil-resistance, abrasion-resistance and flame-resistance during foaming process using additives, and has characteristics capable of adjusting cell shapes of inner structure. A light and strong foam product can be mass-produced if polystyrene or polyurethane is utilized in a process of manufacturing the foam product, and self-weight of the foam product can be adjusted, if specific gravity of overlapped frames is adjusted in the foaming process. In addition, strength of buoyant material or construction material can be greatly enhanced if a strength-reinforcing frame is inserted in an overlapped structure with the foam body (120) during foaming process.

As noted from the foregoing, the present invention can manufacture the foam product (100) by including into the mold (200) the strength-reinforcing frame (110) including at least one of a metal, a synthetic resin, a carbon, a wood and a fibroid material, and inserting polystyrene or polyurethane material into the mold (200).

One of exemplary methods of inserting polyurethane into the mold (200) may include use of a low pressure foaming machine. In case of low pressure foaming machine, two components (POL+ISO) are stored in respective tanks, fed under a low pressure of 3∼5 bars, mechanically mixed by a mixer rotated by a motor of 6,000∼8,000 rpm in a chamber, and then residuals are cleaned between the chamber and the mixer.

A high pressure foaming machine may be used for a large-sized mold (200) as one of polyurethane insertion method. The high pressure foaming machine can make the quality of foam body (120) stable due to its capacity of inserting liquid of more than 300ml/sec and diluting the liquid in a large-sized mold.

Referring to FIG.2, the frame (110) inserted into the mold (200) for foaming and the foam body (120) may be variably overlapped. At this time, different characteristics and phenomenon of the foam body and frame are overlapped to maintain one shape, but each characteristic of overlapped foam body and the frame remain unchanged even after overlapping. The exemplary case of overlapping includes the overlapping, to the foam body (120), of the strength-reinforcing frame (110) inserted into the mold (200) for foaming, the mutual connection between the frame (110) and the foam body (120), hardening (curing) of the foam body (120) by being permeated into a mesh structure or a sponge structure of the frame (110), or overlapping (lamination) between the frame (110) and the foam body (120), each still maintaining its intrinsic characteristic. That is, in a case the frame (110) including at least one of a metal, a synthetic resin, a carbon, a wood and a fibroid material is first inserted into the mold (200), and polyurethane is inserted into the mold (200) in a liquid state through a foaming machine and hardened, a polyurethane foam product (100) overlapped in a complex structure can be manufactured from the frame (110) and the foam body (120).

Furthermore, as illustrated in FIG.3, it is possible that a first area (reference numeral I area in FIG.3) corresponding to one portion of the frame (110) is inserted with polyurethane, for example, in a liquid state using the mold (200) and hardened, and the mold (200) is moved to a second area (II area in FIG.3) and the foam body (120) is inserted and hardened at a portion of the frame (110) positioned at the second area. As a result, the foaming process for each stage relative to each area can be completed. The expandability of each stage is enabled, because its adhesiveness (adhesive strength) is very strong, in a case foaming is additionally performed on the hardened polyurethane foam material. The adhesiveness is very good, even in the case of polyurethane of respectively different specific gravity.

Adjustment of specific gravity is also possible for upper/bottom surfaces and outside/inside of the buoyant structure, if the characteristics of polyurethane are utilized. In case of foaming of buoyant structure, there are cases where it is difficult to foam at one time using one mold (200) if the buoyant structure is too wide in width or long in length. In order to overcome the disadvantage, a finished frame (110) is accommodated, a mold (200) smaller than the buoyant structure is prepared, a complex structure forming process to the I area is completed, where if the same processes are performed on II, III, IV areas for repeated batch processing, a complex structure of buoyant structure (body) size can be finished. That is, in a case a series of repeated batch processes is performed where a mold (200) is prepared for the reference numeral I area (hereinafter referred to as 'first area'), polyurethane is inserted and hardened, and the mold (200) is moved to the reference numeral II area (hereinafter referred to as 'second area') and polyurethane is re-inserted and hardened, a complex structure of buoyant structure size can be accomplished. In another exemplary embodiment, in order to shorten a manufacturing time, several sets of molds (200) are prepared from a first mold (200a) to a fourth mold (200d), and polyurethane is simultaneously inserted into and hardened at the molds (200), simultaneous works may be performed for all areas including the reference numerals I, II, III, IV areas.

The foam product (100), in which strength-reinforcing frame (110) and buoyancy-reinforcing foam body (120) are overlapped, can accomplish excellent mechanical strength, enhanced buoyancy and lightness at the same time. This structure of foam product (100) can be mass-produced to allow being used as very useful buoyant structure for conventional ships, leisure boats, amphibious moving objects and rescue boats, and for construction materials such as marine-based construction materials, bridges and floating bridges.

In the present invention, the polyurethane is a urethane polymer polymerized by urethane bonds. The urethane bond is formed by reaction heat generated by addition polymerization reaction of alcohol having active hydroxyl grouds (-OH) and isocyanate having isocyanate groups (-N=C=O). Isocyanates having one or more NCO groups and alcohols having one or more -OH are called polyfunctionals. In a case the polyfunctionals emit a high temperature under a predetermined appropriate condition and generate compounds having -NHCOO- structure, it is called urethane bond, and polyurethane bond is where 1000 or more molecules are bonded. Urethane is categorized into polyester urethane and polyether urethane.

Isocyanate and diol or isocyanate and triol are largely used for polyester urethane, which is mainly manufactured from diol of high molecular weight or diol of low molecular weight, and is a block copolymer having soft segments largely formed with diol of hard molecular weight, and having hard segments largely formed with diol of low molecular weight. The polyester urethane exhibits rubbery elasticity due to thus mentioned structure. Chemical composition of polyurethane, length of block copolymer and secondary and tertiary structure are changed largely by types of used polyisocyanate and diol of high molecular weight. Triol may be used and have great influence on physical properties of final product.

The process of manufacturing polyester polyurethane is such that propylene glycol and ethylene glycol are reacted with adipic acid to manufacture polyester, polyether having molecular weight of less than 3,000 and OH radicals at both ends is made into urethane and polymerized by using naphthalene-1,5-diisocyanate. The polyester polyurethane manufactured by the abovementioned method is harder than polyether urethane because it is made of low blowing foam over the polyether urethane, albeit being a bit variable depending on rigidity or flexibility. Hence, polyester polyurethane is largely used for products that require a high mechanical strength such as tensile strength and hardness. In one exemplar embodiment, if the polyether polyurethane is utilized as buoyant structure, for example, in the foam product (100) according to the present invention, the polyether polyurethane may be utilized as foam body for a bottom section of waterline (draft line) that requires high specific gravity and high strength.

Meanwhile, the polyether polyurethane is a highly expandable material with a high porosity, may be used for light-weighted products, and as foam body for upper section of water line, in case of laminated foaming and being used as buoyant structure, due to lightness and excellent expandability. The polyisocyanate and polyol are utilized as main material for polyether polyurethane.

Polyol is a material obtained by reacting under an appropriate condition poly-functional alcohol having OH radicals or two or more amine radicals in molecules, initiators such as aromatic amine, propylene oxide or ethylene and is an important raw material for manufacturing polyether polyurethane.

The present invention according to an exemplary embodiment is largely characterized by the fact that advantages of lightness and increased buoyancy are maximized with emphasis on high expandability of polyether polyurethane, a frame (101) made of a material having a strong rigidity is used as an initial structure to cope with the disadvantage of polyether polyurethane and to improve tensile strength, and external and internal strengths are increased through polyurea coating (described later).

Furthermore, the present invention may couple low expandability and high specific gravity of polyester polyurethane and high expandability and low specific gravity of polyether polyurethane. An object of laminated structure of foam product can be accomplished through bonds of mutually different foaming materials by using polyester polyurethane having a relatively high specific gravity for a submerged area as buoyant structure, and using polyether polyurethane having a relatively low specific gravity for an area requiring a low specific gravity and high buoyancy.

Now, a more detailed explanation will be provided for lamination method. The lamination method may be configured such that polyether polyurethane and polyester polyurethane, polyester polyurethanes of mutually different specific gravity or polyether polyurethanes of mutually different specific gravity may be laminated.

In addition, the polystyrene (PS), an amorphous polymer obtained by radical polymerization of styrene, is a colorless and transparent thermoplastic resin, and is also called styrole resin. the polystyrene (PS), a polymer of liquid styrene monomer generated by reacting ethylene and benzene has a low specific gravity, followed by polypropylene and polyethylene, and has a high refractive index that is most easily processible among various types of plastics.
The polystyrene includes styrene, and may be divided into GPPS (General purpose polystyrene) which is a homo-polymer of styrene, HIPS (High Impact Polystyrene) polymerized with rubber to the styrene, and EPS (Expandable Polystyrene) in which polystyrene is mixed with propane, butane and pentane as an foaming agents. However, the polystyrene which is not particularly divided in the present specification covers all types of abovementioned polystyrenes.

Although the GPPS (General purpose polystyrene) is a homo-polymer of styrene and has basically low specific gravity, low tensile strength and low heat deflection temperature, the GPPS has a good flow during dissolution, and is therefore adequate for manufacturing thin forming products with high efficiency.

Furthermore, the High Impact Polystyrene is generally abbreviated as HIPS. The HIPS is a product mixed with rubber to overcome the frangibility, one of the greatest disadvantages of polystyrene, and has a characteristic that increases in specific gravity and impact strength as rubber contents increase. However, mixture of rubber deprives the transparency, one of the characteristics of polystyrene, whereby the HIPS becomes ivory white and semi-transparent. In a case the HIPS is polymerized with pre-rubber solved styrene monomer, the HIPS becomes a so-called graft polymer having polystyrene side chain on the rubber, whereby compatibility of rubber and polystyrene is increased, impact resistance becomes very good and specific gravity is also increased.

The EPS (Expandable Polystyrene) is a polystyrene mixed with, for example, propane, butane and pentane as an foaming agents(an expander), and can obtain a light and strong expandable forming product by being expanded by 20∼70 times through a simple heating in a proper mold. Furthermore, the polystyrene and the foam body are directly mulled and molten inside an extruder to manufacture a plate-shaped or pipe-shaped foam body at one time. The expandable polystyrene is very excellent in terms of blocking action against heat and sound, because of being formed with independent air bubbles, and is also very excellent as insulating materials or as sound absorbing materials for wide use in storage or construction industries. In addition, the polystyrene foam body is used in various fields as packing materials and buoyant structure. The expandable polystyrene may be categorized into high ratio expandable polystyrene having a high specific gravity, and low ratio expandable polystyrene having a low specific gravity. That is, a low expandable extruded foam product may be manufactured by means including, injection molding of polystyrene added by a small quantity of foam body under insufficient charged condition, extrusion of expandable polystyrene, or insertion of blowing agent during extrusion of polystyrene.

In the present invention, efficiency of two materials can be maximized by laminating polystyrene of low specific gravity with polyurethane of relatively high strength but of low specific gravity, and expanding the same. At this time, the foam body is made of polyurethane, and polystyrene is laminated with the polyurethane in a pre-expanded state.

That is, the polystyrene is inserted during polyurethane foaming in an expanded state to allow being laminated and bonded with the polyurethane.

In a case polystyrene foam body pre-formed and expanded in a mold during polyurethane expansion is included and expanded under a high pressure, a foam body of excellent coherence can be generated in which polyurethane and polystyrene are laminated and bonded, which is a measure to increase the strength and buoyancy of expandable buoyant structure at the same time by bonding polyurethane of high strength and polystyrene of low specific gravity.

Furthermore, the polystyrene (preferably the High Impact Polystyrene) may be increased in external and internal strength through polyurea coating (described later).

Another characteristic of the present invention is to reinforce a surface strength by forming a coated layer (130) on a surface of the foam body.

Although the polystyrene and the polyurethane are easy in expansion and processing, surfaces are not strong. Furthermore, the polystyrene and the polyurethane have a tendency of developing hydrolysis or of absorbing water. That is, in a case metethesis reaction of water molecule that acts as one of reactants occurs, expanded surfaces of the polystyrene and the polyurethane may be damaged.

Although it is possible to prevent the hydrolysis or minimize water penetration by adding additives during expansion to adjust the cell structures, a coated layer may be formed in order to manufacture buoyant structure and construction materials that are safer and more robust to the impact.
In the present invention, polyurea coating is proposed to form a surface or internal coated layer of the foam body (120). The polyurea coating may be classified into polyurea composed of generally-used isocyanate and amine as main materials, hybrid-urea using polyurea, isocyanate and amine, hybrid-urea using polyol and FRP urea, and the term of polyurea coating in the present invention covers all related urea groups including general polyurea, hybrid urea and FRP urea.

First, the generally used polyurea is a 2-component paint composed of isocyanate of quick reactivity and amine, may form paint film having an excellent physical properties and durability after hardening, and is very quick in hardening speed, excellent in constructability and coatable by sprayer. Thus, the polyurea can form a thick paint on inclined surfaces and vertical surfaces of buoyant structure and construction materials.

Hybridurea is a paint composed of isocyanate, amine and polyol. Although the hybridurea is weak in physical properties and durability after hardening over polyurea coating, the hybridurea is inexpensive.

A coated layer formed with polyurea coating is excellent in tensile strength, heat-resistant strength and durability, and in a case the polyurea coating is applied to the foam product (100) according to the present invention, the weak point of being susceptible to surface damages possessed by the polyurethane and polystyrene can be completely supplemented. Furthermore, in a case the polyurea is applied to polyurethane foam body that is weak to UV (Ultraviolet), the polyurea forms a coating layer to have a great blocking effect on UV, and therefore, it is an essential process to utilize the polyurethane foam body as a foam product.

Particularly, in a case the polyurea is utilized even to leisure boats, amphibious moving objects and life boats, the polyurea can safely protect the buoyant structure (body) when coated with an appropriate thickness (above 0.5mm) even during collision with obstacles because of lightness, and excellence in strength and elasticity. Furthermore, in a case the polyurea is utilized to military boats or military amphibious moving objects, the bullet-proof effect can be highly improved if the thickness of coating layer is increased.

Still furthermore, the present invention can increase safety by reinforcing external strengths of polyurethane and polystyrene and enables implementation of human resource useable, economic drainage method for civil engineering works due to lightness, in a drainage method capable of preventing collapse accidents that occur due to bad drain constructions of civil engineering structures by using lightness and water permeability of foam products and retaining walls and back-filling materials for stone works by being coated to internal and external surfaces of foam products.

In addition, the polyurethane coating can build buildings by expanding or foaming a structure itself through reinforcement of external strengths of polystyrene and polyurethane even in prefabricated structures, whereby time and costs can be reduced, and in particular, weakness of polystyrene and polyurethane that occurs in marine-based houses can be supplemented for efficient utilization.

As a result, the present invention enables increased adhesive strength of the coated layer on surfaces of foam products due to adhesive strength in polystyrene or polyurethane of foam body and coated layer of polyrurea.

By way of examples, a lower area below a water line of a ship composed of general buoyant structures such a FRP, a wood and a metal may have influence on weight center and restoring force of surface vessels, an upper area above the water line forms an entire shape of a ship, and serves to generate the restoring force when the ship tilts and to prevent penetration of water into the ship. That is, the buoyant structure forming an upper structure above the water line has no direct influence on ship navigation.

Hence, in a case the buoyant structure below a water line (CO) is configured to have a specific gravity of more than 1.0 to allow stable marine navigation, and the buoyant structure above the water line is configured to be laminated or stacked with foam bodies of strength-secured positive specific gravity (less than 0.5 for polyurethane, and less than 0.05 for polystyrene) according to the present invention, weight center of a ship can be reduced compared with that of conventional ship structure, in addition to reduction in weight of a ship, and restoring force can be increased through control of specific gravity in buoyant structure itself.

Even in manufacturing process of amphibious moving objects, there are many cases where floor surfaces of buoyant structure are flat due to restrictive configuration of buoyant structure based on land-based movement. If the floor surfaces of buoyant structure are flat, it may be convenient for the buoyant structure to move on land, but marine stability deteriorates due to limitation in reducing the weight center if submerged. Thus, the stacked (laminated) foam (expanded) technology according to the present invention can be applied to reduction in weight center of a ship position and water stability despite the flat floor structure.

The characteristics of the present invention may be handily utilized for improvement of military amphibious boats, amphibious armored cars, military landing crafts of military rubber boats, and also used as various construction materials.

FIG.4 is a cross-sectional view illustrating a frame (110) including a first member (111) and a second member (112) according to the present invention.
The frame (110) according to the present invention may include at least one of a first member (111) having a mesh structure, a honeycomb structure or a sponge structure, and a second member (112) of single structure. That is, the frame (110) according to the present invention may include mutually different structures or members of different shapes. The first member (111) may include a metal, a synthetic resin, a carbon, a fibroid material, non-woven fabric, cloth, cement or stone structure. It is preferable that the first member (111) have a mesh structure, a honeycomb structure or a sponge structure. The second member (112) may include a metal, a synthetic resin, a carbon, a fibroid material, non-woven fabric, cloth, cement or stone structure, for reinforcement of strength. It is preferable that the second member (112) have a single structure in addition to a mesh structure, a honeycomb structure or a sponge structure.

Of course, the frame (110) according to the present invention may be configured with any one of the first member (111) and the second member (112).
Thus, in a case the frame (110) includes the first and second members (111, 112), at least at least some parts of the first and second members (111, 112) may face each other. That is, at least some of the first and second members (111, 112) may be mutually overlapped, brought into contact or laminated (stacked), where the number of laminations and a laminating order are not particularly limited.

Furthermore, at least one of the first and second members (111, 112) may include internally polyurea-coated layers (113a, 113b). That is, the frame (110) according to the present invention includes one or several polyurea-coated layers. The inner-coated layers (113a, 113b) are intended to reinforce the strength and to provide a frame (110) that is safer and more robust to impact by dualizing water proof, elasticity and strength, and to manufacture a foam product (100) including the inner-coated layers (113a, 113b). The polyurea forming the inner coated layers (113a, 113b) has been already explained and no further details thereto are omitted.

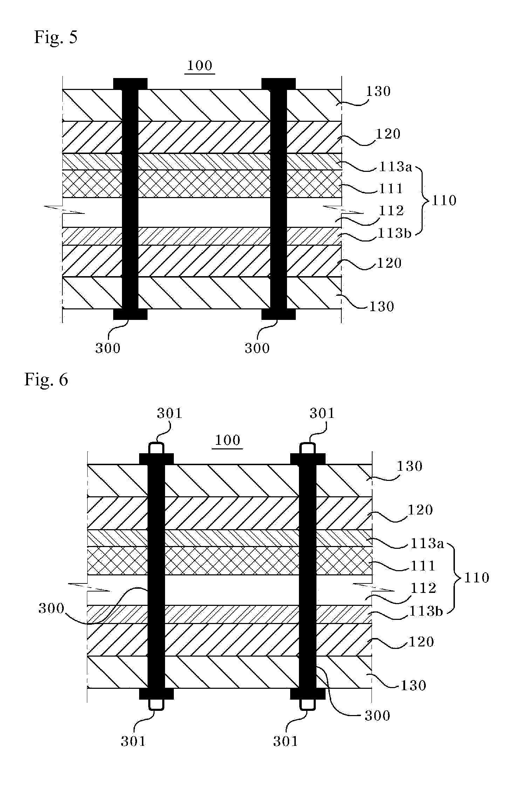

FIG.5 is a cross-sectional view illustrating a structure of a foam product (100) including a support member (300) according to the present invention.

The foam product illustrated in FIG. 5 may further comprise a foam body (120) overlapped with the frame (110), and a support member (300) piercing the inner- coated layer (130) formed at the foam body (120).

The support member (300) may use a member which is of the same material and/or shape of the abovementioned first member (111) and/or the second member (112).

Thus, the present invention may include the frame (110), a foam body (120) and a coated layer (130) and a separate support member (300) that passes through the coated layer (130), whereby the physical properties of foam product (100) can be further improved. That is, although the foam product (100) comprised of only the frame (110), the foam body (120) and the coated layer (130) may develop slippage or twist at each layer, the further inclusion of the support member (300) can increase the coherence of each layer.

To this end, the support member (300) can pass through the frame (110), the foam body (120) and the coated layer (130), and as illustrated in FIG.5, it is preferably that the frame (110), the foam body (120) and the coated layer (130) be stacked to a horizontal direction.

At this time, the support member (300) may be connected or bonded to the frame (110), the foam body (120) and the coated layer (130) respectively, and particularly, may be preferably connected or bonded to inner coated layers (113a, 113b) of the frame (110).

FIG.6 is a cross-sectional view illustrating a structure of a foam product including a ring or a coupling device capable of coupling or connecting other foam products or equipment to a frame including a support member according to the present invention.

That is, the foam product may include a ring or a coupling device (301) capable of coupling or connecting other foam products through a frame overlapped with foam body or the support member according to the present invention. This is a configuration necessary for attaching or connecting additional devices or parts to the foam product.

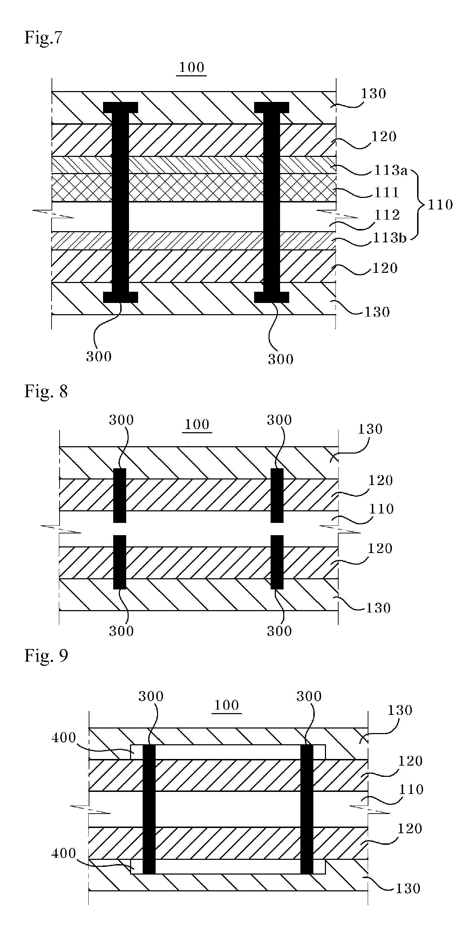

FIG. 7 is a cross-sectional view illustrating a structure of a foam product in which a frame including a support member pierces a foam body to be coupled to a coated layer according to the present invention, where it is illustrated that the support member (300) may be bonded only to the coated layer. This is to illustrate a structure in which the support member (300) is included in the coated layer to be prevented from being exposed to outside of the foam product.

FIG.8 is a cross-sectional view illustrating a structure of a foam product in which a part or an entire of a frame (110) may be coupled to a polyurea coated layer (130) according to the present invention, where the frame (110) is overlapped to one area inside the foam product (100) to be bonded to the coated layer without piercing the foam body, and the frame (110) is prevented from being exposed to the outside of the foam product (100).

The bonding or coupling process may be implemented by the frame (110) itself being coupled or bonded to the coated layer (130), or through a separate support member (302).

Meanwhile, the present invention may take another configuration in which a separate additional frame (400) is included between the foam body (120) and the coated layer (130). FIG. 9 illustrates the additional frame (400).

The additional frame may be simultaneously formed when the foam body (120) is formed on the basic frame (110), or although the additional frame is overlapped on a part of surface of the foam body (120) to be bonded to the coated layer, the additional frame may be simply placed on the fame body, or physically or chemically connected or not connected to the foam body. In case of using a general polystyrene for the foam body (120), the additional frame is simply brought into contact with the general polystyrene, and may not be physically or chemically connected or coupled to the general polystyrene.

Hence, even in the foam product having the abovementioned structure, a part or an entire area of the additional frame may pierce the foam product to be connected or coupled to the other surface of the coated layer, and the foam product having the abovementioned structure may further include an additional support member (303) that passes through the foam body.

Furthermore, the foam body (120) utilized in the present invention is a very light material, and may have a specific gravity of 0.011∼0.15. Therefore, adjustment or control of buoyancy is required for a case of utilizing, as buoyant structure, the foam product (100) based on the foam body (120), and for a case of utilizing the foam product (100) as marine-based building materials. This is because marine-based building materials having too low specific gravity may cause a problem of stability.

As a measure to solve the aforementioned problem, weight of the foam product (100) can be adjusted using a frame overlapped on the foam body (120). That is, a method may be applied where a lower area of the foam product (100) contacting the water is disposed with a heavier frame (110), while an area not contacting the water is formed with a lighter weight of frame (110). This method is a technique that can be easily accomplished because the frame (110) is overlapped with the foam body (120).

Furthermore, one of the methods to adjust the weight and buoyancy of foam product (100) may include a method in which a space is provided at an interior of the foam product (100) to accommodate water or air, and the weight of the foam product (100) can be adjusted using amount of water or air accommodated inside the space. For example, the foam body (110) is overlapped with a piercing type cylinder frame (500) formed with a space capable of accommodating water and air, and switches (510, 520) are mounted at front and rear sides of the piercing type cylinder frame (500) to accommodate the water or the air, whereby self-weight (specific gravity) and buoyancy of foam product can be adjusted by the amount of water and air accommodated into the piercing type cylinder frame (500), which means that the foam product may be very efficiently utilized as buoyant structure if the foam product is used as buoyant structure. This is because the self weight of the foam product can be controlled or adjusted.

At this time, in a case the front switch (510) of the piercing type cylinder frame (500) is attached to an upper end of the foam product to accommodate air, and a rear switch (520) is attached to a lower end of the foam product to accommodate water, the weight and buoyancy of the foam product can be easily adjusted.

For example, instability of a ship may occur due to low specific gravity, if the foam product (100) is used as buoyant structure of the ship. At this time, in a case the rear switch (520) is opened to accommodate the water, and the rear switch (520) is closed to remove water from the piercing type cylinder frame (500) when additional buoyancy is required, an additional adequate amount of buoyancy can be acquired.

Furthermore, all the front and rear switches (510, 520) of the piercing type cylinder frame (500) may be opened to accommodate the water or the air.

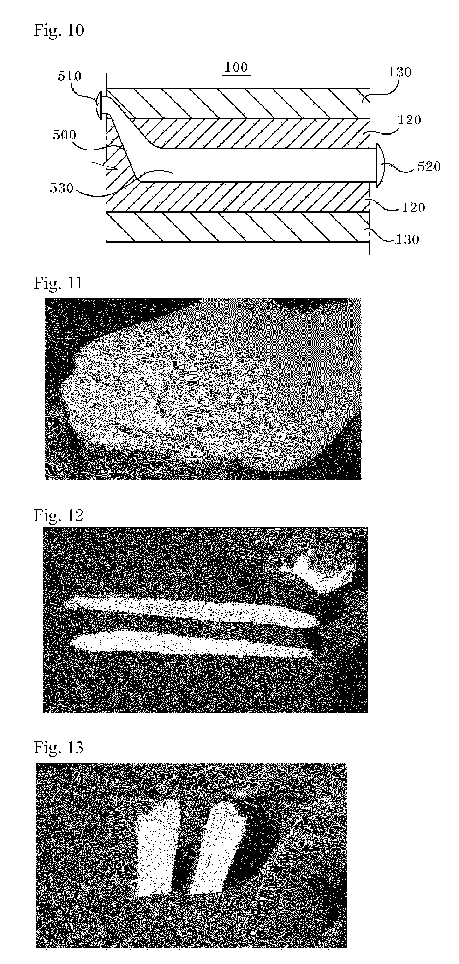

In a case the foam product is utilized for a ship, water and air accommodated into the piercing type cylinder frame (500) can be automatically adjusted to allow an efficient performance of ship navigation due to the characteristics of a ship in which water is stably introduced by self weight during mooring and a bow is lifted during high speed of a ship. The technique regarding the piercing type cylinder frame (500) is illustrated in FIG. 10.

### [Mode for Invention]

The present invention will be more fully understood with reference to the following exemplary embodiments, and the following exemplary embodiments are provided for an exemplary object of the present invention. The present invention should not be construed as being limited to the protective scopes defined by claims set forth herein.
The polyurea is coated on surface of foam body, where the polyuera is also used as a raw material of adhesives due to strong coherence. Particularly, the polyurea contains the same component as that of polyurethane (e.g., isocyanate) to make physical and chemical coherences excellent, whereby coating of the polyurea to the present invention is much improved over the coating of the polyurea on other general materials in terms of cementing power (adhesion energy), mechanical strength, tensile strength, elasticity, impact-resistance and resistance to UV. The polystyrene also exhibits an excellent coherence with the polyurea.

Now, an experimental example on coating agent will be described in the following.

FIG.11 is a photograph illustrating an expansion using general polyurethane without addition of component for coating layer. That is, FIG. 11 is a photograph illustrating a result of strength experiment of a coated layer-free polyurethane foam product as a comparative example according to an experimental example of the present invention.
When a hammer strike is applied to an area (length of a hammer is 70cm and strike was made by a 70kg-weighed adult with full force) three days after curing, the area struck by the hammer was caved in, but the strength is such that the cave-in was strictly restrained to the relevant area.

Meanwhile, FIG. 12 is a photograph illustrating adhesive property between foam body and coating agent, where polyurea is coated with a thickness of 1.5mm five days after curing, which is cut after being exposed to sunlight for a year. That is, FIG. 12 is a photograph illustrating a result of strength in an experiment of a coated layer-processed polyurethane foam product as an experimental example according to the present invention.
As exhibited by FIG. 12, an excellent result is shown in which no serious cracks or damages are reported as a result of check on strength and elasticity after strike by a hammer on a polyurea coating.

FIGS.13 is a photograph illustrating experimental results of a process in which coated layers are formed using polyurea, after lamination by expanding polyester polyurethane and the polyether polyurethane. That is, polyurea coating was conducted as an example with a foam body of polyether polyurethane inserted and expanded in a mold, from which it was confirmed that polyester polyurethane of mutually different specific gravity and polyeter polyurethane, or polyether polyurethane of mutually different specific gravity and polyether polyurethane can be configured for being laminated or stacked. Furthermore, it was confirmed that the stacked polyurethane foam body can be also excellently formed on the polyurea coated layer.

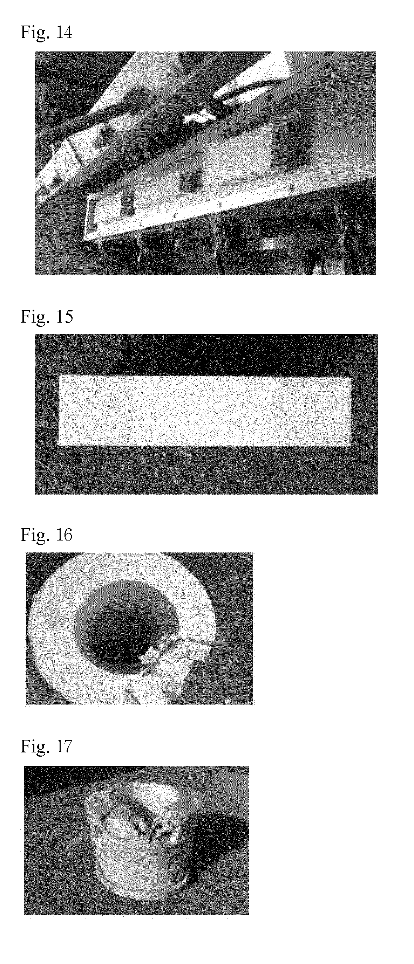

FIGS. 14∼15, and 18∼19 are photographs in which lamination between the polyurethane and polystyrene are possible. As illustrated in the photographs, a process and a result thereof can be confirmed in which pre-expanded polystyrene is inserted into a mold, and polyurethane is laminated and stacked, whereby a usefully utilized foam product can be obtained that has an excellent adhesive strength and that has polystyrene of low specific gravity and polyurethane of high strength effect.

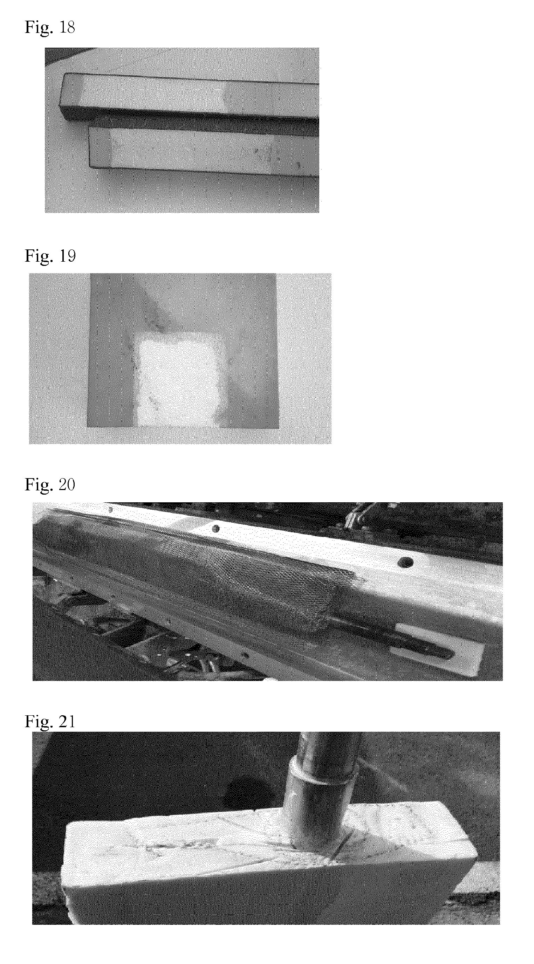

The stacked polyurethane foam body and polystyrene foam body can be also formed with a polyurea coated layer to increase a coupling of stacked state and to reinforce an external strength, the proof of which can be confirmed by FIG. 18.

Next, an experiment of UV-resistance of coated layer will be explained by FIGS. 16 and 17. FIGS. 16 and 17 are photographs illustrating a result of UV-resistance experiment of a coated layer-free polyurethane foam product as experimental comparative example according to the present invention. FIG. 17 illustrates a case where coated layer-free polyurethane is discolored by being exposed to sunlight and rain for a year.
In contrast, in a case a coated layer is formed, it can be confirmed that the probability of being discolored by UV as in FIGS. 12, 13 and 16 is greatly decreased.

Next, FIGS. 20 and 21 illustrate a process of the frame being overlapped on a foam body. FIG. 20 is a photograph a state in which first and second members are inserted into a mold, where it can be confirmed that the first member is inserted with a mesh structure and a sponge structure are mixedly inserted. A single structure of steel rod frame is utilized as the second member.

FIG. 21 is a partially-cutout photograph of a buoyant structure in which a mold inserted by the first and second members is cured by being infused with liquid polyurethane. It can be confirmed that first members of mesh structure and sponge structure are bonded to a foam body, and the steel rod second member are also tightly bonded and cured to become a very strong foam product.

The previous description of the present invention is provided to enable any person skilled in the art to make or use the invention. Various modifications to the invention will be readily apparent to those skilled in the art, and the generic principles defined herein may be applied to other variations without departing from the spirit or scope of the invention. Thus, the invention is not intended to limit the examples described herein, but is to be accorded the widest scope consistent with the principles and novel features disclosed herein.

## Claims

1. A foam product including a foam body overlapped with a frame, wherein the foam body includes PS (Polystyrene) or polyurethane, and wherein the PS is one or more selected from a group consisting of GPPS (General Purpose Polystyrene) which is a homopolymer of styrene, HIPS (High Impact Polystyrene) and EPS (Expandable Polystyrene) mixed with foaming agents, and wherein the polyurethane is one or more selected from a group consisting of polyether polyurethane and polyester polyurethane, and wherein a surface or an interior of the foam body is formed with polyurea-coated layers having a isocyanate.

2. The foam product of claim 1, wherein the foam body includes polyurethane, wherein the polyurethane includes polyisocyanate, and is one or more selected from a group consisting of polyether polyurethane including polyol, and polyester polyurethane including diol or triol.

3. The foam product of claim 1, wherein the foam body includes polyurethane, wherein the polyurethane includes a laminated configuration in which polyester polyurethane and polyether polyurethane of mutually different specific gravity, polyester polyurethane and polyester polyurethane of different specific gravity, or polyether polyurethane and polyether polyurethane of different specific gravity are laminated.

4. The foam product of claim 1, wherein the foam body includes polyurethane, wherein the polyurethane includes a configuration laminated with polystyrene.

5. The foam product of claim 1, wherein the polyurea includes amine, or amine and polyol.

6. The foam product of claim 1, wherein the polyurea-coated layer is configured to bond a part or all of the frame.

7. The foam product of claim 1, wherein the frame is overlapped with a part of surface of the foam body to bond the coated layer, and a part or all the frame is configured to pass through the foam body to bond the other surface of the coated layer.

8. The foam product of claim 1, wherein the frame is mounted with a device capable of being connected or being coupled to other foam bodies, other mechanisms or other equipment.

9. The foam product of claim 1, wherein the frame is overlapped with the foam body as a piercing type cylinder, the piercing type cylinder frame is mounted with switches at front and rear sides to accommodate water or air, whereby self-weight and buoyancy of foam products can be adjusted by water and air.

10. The foam product of claim 9, wherein the piercing type cylinder frame is configured such that a front switch is attached to an upper end of the foam product to accommodate air, and a rear switch is attached to a lower end of the foam product to accommodate water.

11. The foam product of claim 1, wherein the frame includes a first member having a mesh structure, a honeycomb structure or a sponge structure, and a second member having a single structure.

12. The foam product of claim 11, wherein any one or both the first and second members include an inner layer coated with polyurea.

13. The foam product of claim 11, further comprising a foam body overlapped with the frame, and a support member piercing the inner coated layer formed at the foam body to be coupled to the surface coated layer.
